# EUROPÄISCHE PATENTSCHRIFT

(11) **EP 1 101 556 B1**
(45) Veröffentlichungstag und Bekanntmachung des Hinweises auf die Patenterteilung: **04.08.2004**
(21) Anmeldenummer: 00122420.3
(22) Anmeldetag: 13.10.2000
(51) Int. Cl.: B23C 5/24, B23B 31/30, B23C 5/08

(54) **Werkzeugkopf**
Tool head
Tête d' usinage

(30) Priorität: 19.11.1999 DE 29920336 U
(43) Veröffentlichungstag der Anmeldung: 23.05.2001
(73) Patentinhaber: Schäffer Präzisionswerkzeuge GmbH & Co. KG, 32051 Herford (DE)
(72) Erfinder: Aleth, Britta, D-32120 Hiddenhausen (DE); Ledebrink, Ingo, D-33335 Gütersloh (DE)
(74) Vertreter: TER MEER STEINMEISTER & PARTNER GbR

(56) Entgegenhaltungen:
- GB-A- 953 647
- US-A- 3 961 780
- US-A- 5 522 441

## Beschreibung

Die Erfindung betrifft einen Werkzeugkopf mit zwei auf einer gemeinsamen Welle festspannbaren, axial gegeneinander verstellbaren Werkzeugträgern gemäß dem Oberbegriff von Anspruch 1 wie er aus GB 953 647 bekannt ist.

Ein Beispiel eines solchen Werkzeugkopfes ist etwa ein Fräskopf mit axial gegeneinander verstellbaren Schneidmessern, wie er beispielsweise zum Fräsen von Nuten oder Federn an Paneelbrettern oder dergleichen eingesetzt wird. Bei solchen Werkzeugköpfen ist es wesentlich, daß das Axialmaß der Schneiden der Schneidmesser relativ zueinander mit hoher Präzision eingehalten wird. Wenn ein Werkzeugträger mit Schneidmessern bestückt ist, die eine schräg oder rechtwinklig zur Drehachse der Welle verlaufende Fläche des Werkstücks bearbeiten, so ändert sich das Axialmaß der Schneiden dieser Schneidmesser relativ zum anderen Werkzeugträger, wenn die Schneidmesser nachgeschärft werden. Dies muß dann durch eine entsprechende axiale Nachstellung des Werkzeugträgers ausgeglichen werden.

Ein anderes Anwendungsbeispiel ist ein Werkzeugkopf, bei dem die Schneidmesser eines Werkzeugträgers eine parallel zur Drehachse der Welle verlaufende Fläche bearbeiten und dabei jeweils nur auf einen relativ kurzen Abschnitt der Gesamtlänge ihrer Schneiden beansprucht werden. In diesem Fall dient die axiale Verstellung des Werkzeugträgers dazu, einen anderen, noch nicht abgenutzten Abschnitt der Schneiden in die wirksame Position zu bringen.

Es sind Werkzeugköpfe bekannt, bei denen die Werkzeugträger mit Hilfe einer Hydrobuchse auf der Welle verspannt werden. Eine solche Hydrobuchse ist radial zwischen dem Außenumfang der Welle und dem Innenumfang des Werkzeugträgers oder der Werkzeugträger eingefügt und weist eine in Umfangsrichtung verlaufende Kammer auf, die durch Zuführen eines hydraulischen Druckmediums aufgeweitet werden kann, so daß die Hydrobuchse und der Werkzeugträger fest auf der Welle verspannt werden. Die Axialverstellung kann nur bei entspannter Hydrobuchse vorgenommen werden. Dabei erweist es sich bei herkömmlichen Werkzeugköpfen als schwierig, eine genaue axiale Verstellung des Werkzeugträgers um ein definiertes Maß vorzunehmen.

Aufgabe der Erfindung ist es deshalb, einen Werkzeugkopf der eingangs genannten Art zu schaffen, der eine einfache und genauere axiale Verstellung des Werkzeugträgers ermöglicht.

Diese Aufgabe wird erfindungsgemäß durch einen Werkzeugkopf gemäß Anspruch 1 gelöst.

Bei dem erfindungsgemäßen Werkzeugkopf wird die Axialposition des verstellbaren Werkzeugträgers sowohl bei gelöster als auch bei gespannter Hydrobuchse durch die Anlage an dem Stellring bestimmt. Da dieser Stellring mit einem axialfest mit der Welle verbundenen Teil (das auch ein Teil der Welle selbst sein kann) in Gewindeeingriff steht, läßt sich die Axialposition dieses Werkzeugträgers mit Hilfe des Stellrings variieren. Die in gleichmäßigen Winkelabständen angeordneten Rastpositonen ermöglichen dabei eine Verdrehung des Stellrings in definierten Winkelschritten und damit eine fein gestufte und präzise Axialverstellung des Werkzeugträgers. Da der Werkzeugträger axial gegen den Stellring vorgespannt ist, ist sichergestellt, daß das einmal eingestellte Axialmaß bis zum Festspannen des Werkzeugträgers mit Hilfe der Hydrobuchse und auch während des Spannvorgangs erhalten bleibt.

Vorteilhafte Ausgestaltungen der Erfindung ergeben sich aus den Unteransprüchen.

Bevorzugt ist der Rastvorsprung federnd abgestützt, so daß das Axialmaß allein durch die Anlage des Werkzeugträgers am Stellring und nicht durch den Rastvorsprung bestimmt wird. In einer besonders bevorzugten Ausführungsform bildet der Rastvorsprung zugleich eine Verriegelungseinrichtung, die den Stellring mechanisch in seiner Winkelstellung verriegelt. Dies läßt sich in besonders einfacher Weise dadurch erreichen, daß der Rastvorsprung an einer federnd im Werkzeugträger gelagerten Taste angeordnet wird, die radial nach außen über den Stellring hinausragt. Um den Stellring zu verdrehen, braucht der Benutzer somit lediglich die Taste niederzudrücken, so daß der Rastvorsprung aus der betreffenden Rastvertiefung austritt. Beim anschließenden Weiterdrehen des Stellrings rastet der Rastvorsprung selbsttätig wieder in der nächsten Rastvertiefung ein, sofern er nicht von Hand in der Entriegelungsstellung gehalten wird.

Ein weiteres Lösungsmerkmal der Erfindung, das sich vorteilhaft mit den oben beschriebenen Merkmalen kombinieren läßt, besteht darin, daß zum Verspannen des verstellbaren Werkzeugträgers auf der Welle eine Hydrobuchse mit zwei konzentrischen Druckkammern eingesetzt wird, von denen die innere zur Fixierung der Hydrobuchse und des einen Werkzeugträgers auf der Welle und die äußere zur Fixierung des verstellbaren Werkzeugträgers auf der Hydrobuchse dient. Da die beiden konzentrischen Kammern getrennt und unabhängig voneinander unter Druck gesetzt und entspannt werden können, braucht zur Axialverstellung des einen Werkzeugträgers lediglich die äußere Kammer entspannt zu werden, während die Hydrobuchse und der starr mit ihr verbundene Werkzeugträger sicher auf der Welle fixiert bleiben. In diesem Fall kann der Stellring auch mit der Hydrobuschse in Gewindeeingriff stehen.

Im folgenden wird ein Ausführungsbeispiel der Erfindung anhand der Zeichnungen näher erläutert.

Es zeigen:
- Figur 1: einen axialen Halbschnitt durch einen Werkzeugkopf; und
- Figur 2: einen Teil des Werkzeugkopfes gemäß Figur 1 in der Draufsicht.

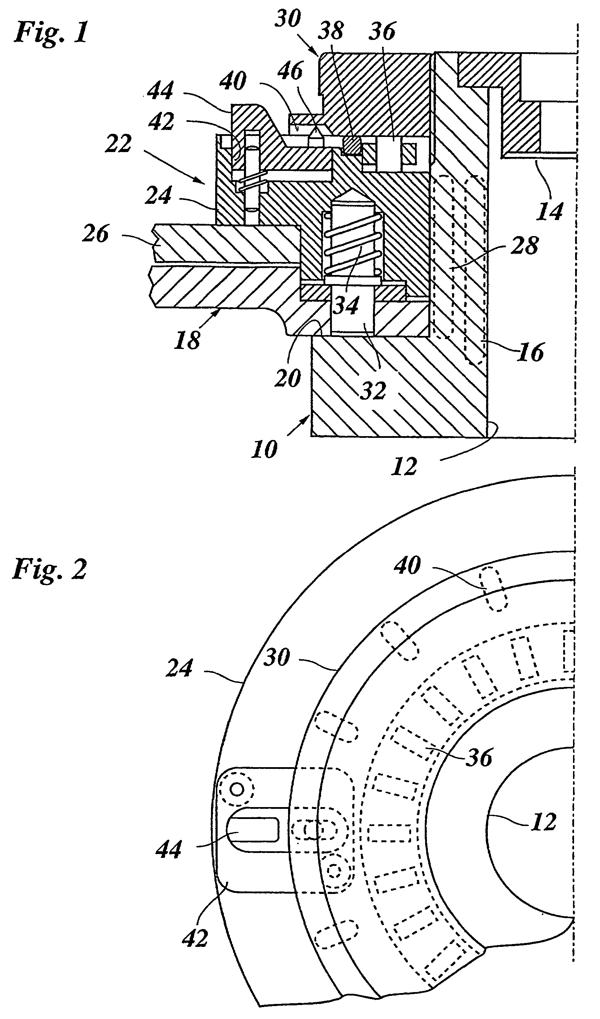

Der Werkzeugkopf weist gemäß Figur 1 eine Hydrobuchse 10 auf, die mit ihrer Axialbohrung 12 auf einer nicht gezeigten Welle zu fixieren ist. Die Axialbohrung 12 ist an einem Ende durch einen Deckel 14 abgeschlossen, der die Axialposition der Hydrobuchse 10 in bezug auf die Welle festlegt. Die Hydrobuchse weist zumindest auf Teilen ihres Umfangs eine die Axialbohrung 12 umgebende innere Druckkammer 16 auf, in der in bekannter Weise mit Hilfe eines nicht gezeigten Hydrauliksystems ein hoher Innendruck aufgebaut werden kann, so daß sich die verhältnismäßig dünne Wand zwischen der Druckkammer 16 und der Axialbohrung 12 nach innen auswölbt. Auf diese Weise wird die Hydrobuchse 10 fest auf der Welle verspannt.

Ein Werkzeugträger 18, der im folgenden als fester Werkzeugträger bezeichnet werden soll, stützt sich axial auf einer Schulter 20 der Hydrobuchse ab und ist in bekannter Weise starr jedoch lösbar mit der Hydrobuchse verbunden.

Ein zweiter Werkzeugträger 22, der im folgenden als beweglicher Werkzeugträger bezeichnet werden soll, ist so auf der Hydrobuchse 10 angeordnet, daß er relativ zu dem festen Werkzeugträgern 18 in Axialrichtung verstellt werden kann. Dieser Werkzeugträger 22 weist im radial inneren Bereich eine Nabe 24 auf, die von einem ringförmigen Werkzeughalter 26 umgeben ist. Der Werkzeugträger 18 und der Werkzeughalter 26 tragen am äußeren Umfang nicht gezeigte Schneidoder Fräswerkzeuge.

Die Hydrobuchse 10 weist in Höhe der Nabe 24 im äußeren Umfangsbereich zumindest auf Teilen ihres Umfangs eine äußere Druckkammer 28 auf, die mit Hilfe eines gesonderten Hydrauliksystems unter Druck gesetzt werden kann, um die Nabe 24 und den Werkzeugträger 18 auf der Hydrobuchse festzuspannen. Wenn die Druckkammer 28 entspannt ist, läßt sich die Nabe 24 und damit der gesamte Werkzeugträger 22 axial auf der Hydrobuchse verschieben.

Ein den Deckel 14 umgebender Endabschnitt der Hydrobuchse 10 weist ein Außengewinde auf, auf das ein Stellring 30 aufgeschraubt ist. Die Nabe 24 des beweglichen Werkzeugträgers 22 ist durch gleichmäßig in Umfangsrichtung verteilte Stifte 32 drehfest und axial verschiebbar mit dem festen Werkzeugträger 18 verbunden und durch auf den Stiften 32 angeordnete Federn 34 elastisch gegen den Stellring 30 vorgespannt. Sie stützt sich über ein Wälzlager 36 an der in Figur 1 unteren Stirnfläche des Stellrings 30 ab. Durch die sehr präzise gearbeiteten Wälzkörper des Wälzlagers 36 ist die Axialposition der Nabe 24 in bezug auf den Stellring 30 mit hoher Präzision festgelegt. Der das Wälzlager 36 aufnehmende Ringraum am Umfang der Hydrobuchse 10 ist nach außen durch eine elastische Dichtung 38 oder eine Filzdichtung abgedichtet.

Außerhalb der Dichtung 38 weist der Stellring 30 an seiner Unterseite einen Kranz von in gleichmäßigen Winkelabständen angeordneten radial verlaufenden Rastvertiefungen 40 auf. Die Nabe 24 weist an der Oberseite an einer Stelle ihres Umfangs eine Ausnehmung 42 auf, in der eine größtenteils außerhalb des Außenradius des Stellrings 30 liegende Taste 44 axialbeweglich geführt ist. Diese Taste trägt einen stiftartigen Rastvorsprung 46, der verriegelnd in eine der Rastvertiefungen 40 eingreift und so den Stellring 30 gegen Verdrehung sichert.

Die Taste 44 ist federnd an der Nabe 24 abgestützt und läßt sich nach unten drücken, so daß der Rastvorsprung 46 aus der Rastvertiefung austritt.

Wenn der bewegliche Werkzeugträger 22 verstellt werden soll, wird zunächst die äußere Druckkammer entlastet, während die innere Druckkammer 16 gespannt bleibt. Die Federn 34 halten die Nabe 24 mit dem Stellring 30 in Anlage. Der Benutzer drückt die Taste 44 nieder und verdreht den Stellring 30, bis der Rastvorsprung 46 in der nächsten Rastvertiefung 40 wieder einrastet. Auf diese Weise wird eine axiale Verstellung des beweglichen Werkzeugträgers 22 um ein genaues definiertes Maß von beispielsweise 0,1 oder 0,01 mm erreicht. Dieses Maß ist von der Gewindesteigung des Gewindes zwischen Stellring und Hydrobuchse und von der Winkelteilung der Rastvertiefungen 40 abhängig.

Wenn der Rastvorsprung wieder in eine der Rastvertiefungen 40 einrastet, ist der Stellring 30 gegen Verdrehung gesichert, so daß sich auch die Axialposition des gegen den Stellring vorgespannten Werkzeugträgers 22 nicht mehr ändern kann. Schließlich wird dieser Werkzeugträger mit Hilfe der Hydrobuchse 10 fixiert, indem deren äußere Druckkammer 28 wieder unter Druck gesetzt wird.

## Patentansprüche

1. Werkzeugkopf mit zwei auf einer gemeinsamen Welle festspannbaren, axial gegeneinander verstellbaren Werkzeugträgern (18, 22), wobei einer (22) der Werkzeugträger elastisch gegen einen Stellring (30) vorgespannt ist, der mit einem in bezug auf die Welle axialfesten Teil in Gewindeeingriff steht, **dadurch gekennzeichnet, daß** dieser eine Werkzeugträger (22) und der Stellring (30) zueinander komplementäre Rastvorsprünge (46) und- vertiefungen (40) aufweisen, die mehrere in gleichmäßigen Winkelabständen angeordnete Rastpositionen für den Stellring definieren.

2. Werkzeugkopf nach Anspruch 1, **dadurch gekennzeichnet, daß** der Rastvorsprung (46) nachgiebig mit der jeweiligen Rastvertiefung (40) in Eingriff gehalten ist.

3. Werkzeugkopf nach Anspruch 2, **dadurch gekennzeichnet, daß** der Rastvorsprung (46), wenn er in eine der Rastvertiefungen (40) eingreift, den Stellring (30) drehfest in bezug auf den Werkzeugträger (22) verriegelt.

4. Werkzeugkopf nach einem der vorstehenden Ansprüche, **dadurch gekennzeichnet, daß** die Rastvertiefungen (40) im Stellring (30) ausgebildet sind und der Rastvorsprung (46) an einer zum Teil außerhalb des Außenradius des Stellrings liegenden Taste (44) angeordnet ist, die ihrerseits beweglich am Werkzeugträger (22) gehalten ist.

5. Werkzeugkopf nach einem der vorstehenden Ansprüche, **dadurch gekennzeichnet, daß** sich der Werkzeugträger (22) über ein Wälzlager (36) am Stellring (30) abstützt.

6. Werkzeugkopf nach einem der vorstehenden Ansprüche, **dadurch gekennzeichnet, daß** der gegen den Stellring (30) vorgespannte Teil des Werkzeugträgers (22) eine Nabe (24) ist, die lösbar mit einem Werkzeughalter (26) verbunden ist.

7. Werkzeugkopf nach einem der vorstehenden Ansprüche, **dadurch gekennzeichnet, daß** Federn (34), die den Werkzeugträger (22) elastisch gegen den Stellring (30) vorspannen, sich an dem anderen Werkzeugträger (18) abstützen.

8. Werkzeugkopf nach einem der vorstehenden Ansprüche, mit einer Hydrobuchse (10) zum Festspannen der Werkzeugträger auf der Welle, **dadurch gekennzeichnet, daß** die Hydrobuchse (10) zwei getrennt zu betätigende Druckkammern (16, 28) aufweist, von denen eine innere (16) zur Fixierung der Hydrobuchse auf der Welle und eine äußere (28) zur Fixierung mindestens eines Werkzeugträgers (22) auf der Hydrobuchse (10) ausgebildet ist.

9. Werkzeugkopf nach Anspruch 8, **dadurch gekennzeichnet, daß** ein Werkzeugträger (18) starr mit der Hydrobuchse (10) verbunden und der andere Werkzeugträger (22) lösbar mit der Hydrobuchse verspannt ist.

10. Werkzeugkopf nach Anspruch 8 oder 9, **dadurch gekennzeichnet, daß** der Stellring (30) mit der Hydrobuchse (10) in Gewindeeingriff ist.

## Claims

1. Tool head with two tool supports (18, 22) which can be tightened on a common shaft and are axially adjustable relative to one another, wherein one (22) of the tool supports is pre-stressed resiliently against an adjustment ring (30) which is in threaded engagement with an element that is fixed axially relative to the shaft, **characterized in that** this one tool support (22) and the adjustment ring (30) comprise catch projections (46) and catch recesses (40) which are complementary with one another and which define for the adjustment ring a plurality of lock-in positions arranged at regular angular intervals.

2. Tool head according to Claim 1, **characterized in that** the catch projection (46) is held resiliently in engagement with the respective catch recess (40).

3. Tool head according to Claim 2, **characterized in that**, when the catch projection (46) is engaged in one of the catch recesses (40), it locks the adjustment ring (30) rotationally relative to the tool support (22).

4. Tool head according to any one of the preceding claims, **characterized in that** the catch recesses (40) are formed in the adjustment ring (30) and the catch projection (46) is arranged on a push-button (44) which is disposed partially outside the outside radius of the adjustment ring and which, for its part, is held movably on the tool support (22).

5. Tool head according to any one of the preceding claims, **characterized in that** the tool support (22) bears on the adjustment ring by means of a rolling bearing (36).

6. Tool head according to any one of the preceding claims, **characterized in that** the portion of the tool support (22) which is pre-stressed against the adjustment ring (30) is a hub (24) which is connected releasably to a tool support (26).

7. Tool head according to any one of the preceding claims, **characterized in that** springs (34), which pre-stress the tool support (22) resiliently against the adjustment ring, (30) bear on the other tool support (18).

8. Tool head according to any one of the preceding claims with a hydraulic bush (10) for tightening the tool supports on the shaft, **characterized in that** the hydraulic bush (10) comprises two pressure chambers (16, 28) to be operated separately, of which an inner pressure chamber (16) is formed for the fixing of the hydraulic bush to the shaft and an outer pressure chamber (28) is formed for the fixing of at least one tool support (22) to the hydraulic bush (10).

9. Tool head according to Claim 8, **characterized in that** one tool support (18) is connected rigidly to the hydraulic bush (10) and the other tool support (22) is fastened releasably to the hydraulic bush.

10. Tool head according to Claim 8 or Claim 9, **characterized in that** the adjustment ring (30) is in threaded engagement with the hydraulic bush (10).

## Revendications

1. Tête d'outil avec deux porte-outils (18, 22) pouvant être serrés sur un arbre commun, déplaçables axialement l'un par rapport à l'autre, dans laquelle l'un (22) des porte-outils est précontraint élastiquement contre une bague de réglage (30) qui est en prise vissée avec une partie fixe axialement par rapport à l'arbre, **caractérisée en ce que** ce porte-outil (22) et la bague de réglage (30) présentent des reliefs d'encliquetage (46) et des creux d'encliquetage (40) complémentaires les uns des autres, qui définissent plusieurs positions d'encliquetage, disposées suivant des écarts angulaires réguliers, pour la bague de réglage.

2. Tête d'outil selon la revendication 1, **caractérisé en ce que** le relief d'encliquetage (46) est maintenu en prise de manière souple avec le creux d'encliquetage (40) respectif.

3. Tête d'outil selon la revendication 2, **caractérisé en ce que** le relief d'encliquetage (46), lorsqu'il s'engage dans l'un des creux d'encliquetage (40), verrouille la bague de réglage (30) de manière qu'elle ne puisse tourner par rapport au porte-outil (22).

4. Tête d'outil selon l'une des revendications précédentes, **caractérisée en ce que** les reliefs d'encliquetage (40) sont réalisés dans la bague de réglage (30) et le relief d'encliquetage (46) est disposé sur une touche (44), située en partie à l'extérieur du rayon extérieur de la bague de réglage, laquelle est maintenue de son coté déplaçable sur le porte-outil (22).

5. Tête d'outil selon l'une des revendications précédentes, **caractérisée en ce que** le porte-outil (22) prend appui sur la bague de réglage (30), par un palier de roulement (36).

6. Tête d'outil selon l'une des revendications précédentes, **caractérisée en ce que** la partie du porte-outil (22), précontrainte par rapport à la bague de réglage (30) est un moyeu (24) qui est relié de manière séparable à un porte-outil (26).

7. Tête d'outil selon l'une des revendications précédentes, **caractérisé en ce que** des ressorts (34), qui précontraignent le porte-outil (22) élastiquement contre la bague de réglage (30), prennent appui sur l'autre porte-outil (18).

8. Tête d'outil selon l'une des revendications précédentes avec une douille hydraulique (10) pour serrer les porte-outils sur l'arbre, **caractérisée en ce que** la douille hydraulique (10) comporte deux chambres sous pression (16, 28) à actionner séparément, dont une chambre intérieure (16) est conçue pour fixer la douille hydraulique sur l'arbre et une chambre extérieure (28) pour fixer au moins un porte-outil (22) sur la douille hydraulique (10).

9. Tête d'outil selon la revendication 8, **caractérisée en ce qu'**un porte-outil (18) est relié rigidement à la douille hydraulique (10) et l'autre porte-outil (22) est serré de manière amovible avec la douille hydraulique.

10. Tête d'outil selon la revendication 8 ou 9, **caractérisée en ce que** la bague de réglage (30) est en prise vissée avec la douille hydraulique (10).
